# EUROPEAN PATENT APPLICATION

(11) **EP 1 166 690 A2**
(43) Date of publication of application: **02.01.2002**
(21) Application number: 01114716.2
(22) Date of filing: 21.06.2001
(51) Int. Cl.: A47G 7/04, A01G 9/02

(54) **Hanging pot and hanger**

(30) Priority: 26.06.2000 JP 2000229927
(71) Applicant: Sugawara Seisakusho Co., Ltd., Kohnosu-shi, Saitama-ken (JP)
(72) Inventor: Sugawara, Atsuhiro, Sugawara Seisakusho Co., Ltd., Ageo-shi, Saitama-ken (JP)
(74) Representative: Schwabe - Sandmair - Marx

(57) **Abstract**

To provide a pot with good appearance which uses a portion of a pot, simple in its structure, can he easily attached by anybody, can be easily treated since the center of gravity is located in the upper portion of the pot and the pot is stable, and can be detachably attached with ease and in which many pots can be suspended at the same time.

A spindle shaped hollow tubular body (2) is provided in the substantially central portion of a pot (1) and a hanging means (4) is attached to the upper end portion of the hollow tubular body (2). In the attachment, a plurality of upward hooks (6) on the lower end of a separate cap shaped hanger (5) are engaged with a flange (3) on the upper end of the hollow tubular body (2). In such a manner, the hanging means (4) is rotatably attached to the cap shaped hanger (5). Therefore, a hanging pot or each of pots hung in multistage can be freely rotatable.

## Description

### Technical Field

The present invention rclates to a flowerpot, which can be hung in a multistage manner only by attaching a hanging member with a simple structure thereto, and also which can be used as a pot for a flower arrangement, an artificial flower or a dry flower. The present invention also relates to a hanger suitable therefor. Throughout the specification, the flowerpot is simply referred to as "pot."

### Background Art

Conventionally, for a flowerpot which can be used by being hung, in order to attach a hanging string to the flowerpot as disclosed in Japanese Patent Application Laid-Open No. Hei 6-169646, a flange portion from the lower edge of an inverted tubular hanging portion with a bottom separate from the flowerpot is inserted into the engaging hole of the bottom portion of the flowerpot to engage and hold this flange portion on the bottom portion of the flowerpot; a hanging string having a connector is inserted into a guide hole on the bottom portion of the tubular portion with the bottom; a hanging string having another connector is hung on the connector and the hanging string having the connector is inserted into a hanging hole on the upper edge portion of a post provided on a water saucer to bind the hanging string so that the water saucer and the hanging flowerpot are suspended. Therefore, various kinds of members are required and they need to be connected together and their structures are complicated so that labor and time are undesirably necessary. Further, as disclosed in Japanese Patent Application Laid-Open No. Hei 8-93, a stand type flowerpot includes a stand, a plurality of supports and holding members, and the hook portions of the respective supports are held by the holding member and the hanging string of the hanging flowerpot is engaged and hung on the hook portions held by the holding members. Additionally, in order to attach the hanging string to the flowerpot, a flange portion from the lower edge of an inverted tubular hanging portion with a bottom separate from the flowerpot is inserted into the engaging hole of the bottom portion of the flowerpot to engage and hold this flange portion on the bottom portion of the flowerpot, the hanging string is inserted into a guide hole on the bottom portion of the tubular portion with the bottom, the hanging string having a connector is inserted into a hanging hole on the upper edge portion of a post provided on a water saucer so that the water saucer and the hanging flowerpot are suspended. Therefore, various kinds of members are required and they need to be connected together and their structures are complicated. Further, the connector is located below the center of gravity of the hanging flowerpot, so that the flowerpot is unstable. Accordingly, the hanging string is allowed to come into contact with the guide hole on the bottom portion of the tubular portion with bottom, into which the hanging string is inserted so that the inclination of the hanging flowerpot is prevented from reaching a certain value or more. Thus, the hanging flowerpot is supported at two points by the hanging string. Still further, when the water saucer and the hanging flowerpot are not prepared together, the hanging flowerpot cannot be hung. Thus, this flowerpot is inconveniently hard to treat. Besides, since separate pipes or vinyl tubes are required to treat excess water, its appearance is deteriorated and a cost is undesirably high. Still further, as disclosed in Japanese Patent Application Laid-Opcn No. Hei 10-327671, a hollow tube is provided in the center of a flowerpot, a hollow tube is also provided on the bottom of a flowerpot mounted thereon and the tubes are laminated with one inserted into another so that the upper and lower flowerpots are formed integrally. However, the flowerpots cannot be hung. If the size of the upper flowerpot is increased, the laminated flowerpots are brought into an unstable state. The size of a flowering plant to be planted is inconveniently restricted. Still further, as disclosed in Japanese Utility Model Publication No. Sho 55-39, a hole is provided in a central portion of the bottom of a pot main body, a saucer to which a tube with an inside screw is attached is inserted into the hole, a connecting member is screwed to the tube with the inside screw, a connecting member having an inside screw is screwed to the upper end of the connecting member, and further, the saucer to which the tube having the inside screw is attached on the bottom portion of the pot main body is attached thereon by a connecting member with an inside screw to stack the pot main bodies in multi-stages. Also in this case, various kinds of members are required, they need to be connected together and their structures are complicated. Further, all the load of the pot main bodies stacked in multi-stages is exerted on the connecting portion of the uppermost pot, so that there arises a problem in view of design. The above-described type of a hanging flowerpot can be disadvantageously applied only to small articles. Since the members are connected together by screws, they need to be detached one by one. Accordingly, much time and labor are needed. In addition, as disclosed in Japanese Utility Model Publication No. Sho 55-35966, an upper flowerpot is provided with a fitting edge fitted to the upper edge of a lower flowerpot when the upper flowerpot, is stacked on the outer peripheral edge of the bottom plate of the lower flowerpot main body so that the pot main bodies are stacked in multi-stages. However, in such a hanging flowerpot, the flowerpot main bodies can be simply stacked, the size of a flowering plant to be planted is restricted. Thus, this type of the hanging flowerpot can he applied only to a small article and a space due to suspension of the hanging flowerpot cannot be employed. Furthermore, as disclosed in Japanese Utility Model Application Laid-Open No. Hei 7-20921, is known a hanging pot of a type that a hanging portion is provided in the upper portion of a support portion and a plurality of detachable holding portions for holding a flowerpot are provided in the periphery of the support portion to employ a space. However, the hanger thereof has a complicated structure and there is no improvement in the pot. The present invention has an attempt to provide a hanging pot and its hanger which use a portion of the pot formed integrally therewith, have simple and rigid structures, are good in appearance and small in the number of portions, can be easily handled, can make a space suitable for various kinds of uses, can be easily detachably attached by anyone, can withstand a load and can be utilized for a variety of uses.

### Technical Problems

Thus, firstly, it is an first object of the present invention to provide a hanging pot with good appearance which uses a portion of the pot, is simple in its structure, can be simply attached by anyone, and is stable and easily handled without interfering with a planting or seeding work, since a spindle shaped hollow tubular body is provided in the substantially central portion of a pot integrally formed therewith and a hanging means is attached to the upper end of the hollow tubular body. Secondly, it is an object of the present invention in addition to the first object to provide a hanging pot comprising a flange portion and a ring shaped downward protrusion provided at the end of the flange portion to serve as a reinforcing rib so as to prevent a hanger from slipping or being deformed. Thirdly, it is an object of the present invention in addition to the first and second objects to provide a hanging pot to which water can be supplied even in a room and which can be applied to a multistage hanging pot and can be attached only to a necessary pot, since a saucer having a tubular portion lower than a peripheral edge is formed on the central portion of a bottom portion is detachably attached to the pot. Fourthly, it is an object of the present invention in addition to the third object to provide a hanging pot of a type that, since the saucer is attached to the pot by screwing the saucer to the pot, the saucer can be detached horizontally from the put without spilling water, the hanging pot can be inexpensively manufactured and can be simply detachably attached. Fifthly, it is an object of the present invention to provide a hanger which is simple in its structure and can be easily detachably attached by anyone, since in the hanging means, a plurality of upward hooks and the flange on the upper end of the hollow tubular body are engaged with the lower edge of a separate cap shaped hanger and a hanging member is only attached to the cap shaped hanger. Sixthly, it is an object of the present invention to provide a pot which is simpler, is simple in its structure with slits formed and can be easily detachably attached by anyone, since the back surface of the flange on the upper end of the hollow tubular body is engaged with a ball and a hole through which a shaft provided with the ball pass is formed on the flange and the slits through which the thickness and width of the hooks on the upper end of the shaft pass are simply formed on the flange of the hollow tubular body. Seventhly, it is an object of the present invention in addition to the fifth object to provide a hanger which can be prevented from slipping out even with a simple engagement, can bear all the weight of the suspended pot and is inexpensive, since the hanging member is provided with a press-in fixing means fitted to a space in the back surface of the flange on the upper end of each of the separate cap shaped hanger and/or the hollow tubular body, the shaft extending in the vertical direction of the press in fixing means, and the hooks formed on the upper end of the shaft and retainers formed on the lower end of the shaft, and a step shaped engaging portion undercut, to a diameter slightly larger than the diameter of the shaft is formed in a press in portion and at least one opposed slits through which the retainers pass are simply opened on the right and left portions of the hole through which the shaft is inserted on the flange in the upper end of the separate cap shaped hanger or the hollow tubular body. Further, it is an object of the present invention to provide an inexpensive hanger in which the pots can be hung in multistages, the hanging member can be easily and simply hung in a desired position in operation only by inserting one retainer or the other annular hook into the flange on the upper end of the cap shaped hanger or the hollow tubular body and the weight of all the suspended pots can be withstood, since the hanging member includes at least one spherical plate arranged at a desired interval and fitted to a space in the back surface of each of the flanges in the upper end of the separate cap shaped hanger and/or the hollow tubular body, a shaft extended in the vertical direction of the spherical plate, and a retainer at one end of both the ends of the shaft and a hook or an annular hook at the other end of the shaft so as to havc a desired configuration suitable for tensile strength, at least one slit for passing the retainer, the annular hook and protrusions therethrough is formed at the right and left portions of the hole for inserting the shaft on the flange in the upper end of the separate cap shaped hanger or the hollow tubular body and the rotation preventing ribs protrude at both the side edges of the slit. In addition, it is an object of the present invention in addition to any one of the eighth to eleventh objects to provide a hanger in which water can be more simply and assuredly treated by hardly spilling water and water can be more simply and assuredly supplied to a pot to which a water guide member is fitted because of the water flowing into the pot from an upper pot, since a member for dropping water is enclosed by the hanging means passing through the tubular portion of the saucer and a shade shaped water guide member is fitted to the hanging means in the upper portion of the pot.

### Solution

In order to solve the above described problems and achieve the objects, firstly, there is provided a hanging pot, characterized in that a spindle shaped hollow tubular body (2) which is integral with a pot, is provided in an approximately central portion of the pot (1), and a hanging means (4) is attached to an upper end portion of the hollow tubular body (2).

Secondly, there is provided a hanging pot as set forth in claim 1, characterized in that a horizontal flange portion (3) is provided onto the upper end portion of the hollow tubular body (2), and a ring shaped downward protrusion (24) is provided to an end of the flange portion (3).

Thirdly, there is provided a hanging pot as set forth in claim 1 or 2, characterized in that a saucer (14) having a tubular portion (13) which is lower than a peripheral edge and is formed in a central portion of a bottom thereof, is detachably attached to the pot (I).

Fourthly, there is provided a hanging pot as set forth in claim 3, characterized in that: a plurality of inclined protrusions or recessed grooves (15) are formed in a lower side wall of the pot (1); a plurality of inclined recessed grooves or protrusions (16) engaging with the protrusions or the recessed grooves (15) are formed in the saucer (14); and the pot (1) and the saucer (14) are attached by screwing to each other.

Fifthly, there is provided a hanger, characterized in that in a hanging means (4), a plurality of upward hooks (6) formed in a lower edge of a separate cap shaped hanger (5) are engaged with ring shaped downward protrusions (24) at an end of a flange (3) of a hollow tubular body (2), and a hanging member is attached to the cap shaped hanger (5).

Sixthly, there is provided a hanger, characterized in that in the hanging means (4), a ball provided to a shaft (9) is engaged with a back surface of the flange (3) on an upper end of the hollow tubular body (2), a hole for passing the shaft (9) is opened on the flange (3), and a slit through which a thickness and a width of a hook (10) on the upper end of the shaft (9) passes, is formed in the flange (3).

Seventhly, there is provided a hanger as set forth in claim 5, characterized in that the hanging member includes: a press-in fixing means fitted to the back surfaces of the flange of an upper end of the separate cap shaped hanger (5); a shaft (9) extending vertically in the upper and lower portions of the press-in fixing means, a hook (10) attached onto the upper end of the shaft (9); and a retainer (11) attached onto the lower end of the shaft (9), and that in the press-in portion, an engagement portion having a step which is undercut to have a diameter slightly larger than that of the shaft (9) is formed, and one slit opposed on a right or left side to the hole for inserting the shaft (9) so as to pass the retainer (11) is opened in the flange on the upper end of the separate cap shaped hanger (5).

### Advantageous Effects

The advantages offered by the present invention will be described below.

Firstly, since the spindle shaped hollow tubular body is provided in the substantially central portion of the integrally formed pot and the hanging means is attached to the upper end of the hollow tubular body, there can be provided a hanging pot with good appearance which uses a portion of the pot without overturning the pot, is simple in structure, can he simply attached by anyone, is stable because a supporting point for suspending the pot is located in the upper portion separate from the center of gravity and easily handled without interfering with a planting or seeding work and in which flowering plants can be appreciated in the position of a line of sight. Further, a pot or each of pots hung in multistage can be freely rotatable. Therefore, the pot can be easily watered under rotating it, and can be turned to any desired positions. Secondly, in addition to the first object, there can be provided a hanging pot comprising a flange portion and a ring shaped downward protrusion provided at the end of the flange portion to serve as a reinforcing rib so that a hanger is prevented from slipping or being deformed. Thirdly, there can be provided in addition to the first and second advantages a hanging pot to which water can be supplied even in a room and which can he applied to a multistage hanging pot and can be attached only to a necessary pot, since a saucer having a tubular portion lower than a peripheral edge is formed on the central portion of the bottom portion is detachably attached to the pot. Fourthly, there can be provided in addition to the third advantage a hanging pot of a type that, since the saucer is attached to the pot by screwing the saucer to the pot, the saucer can be detached horizontally from the pot without spilling water and the hanging pot can be inexpensively manufactured. In addition to any one of the first to fourth advantages, there can be provided a hanging pot in which the lowermost portion of the saucer is a large saucer having no tubular portion or a tank so that water is substantially assuredly prevented from being spilled. In addition to any one of the first to fourth advantages, there can be provided a hanging pot in which the pot is formed in various configurations so that the pot can be employed depending on its use, for instance, it can be hung in the corner of a room with its appearance improved. In addition to any one of the first to fourth advantages, there can be provided a hanging pot in which pots of various shapes are divided by partition plates so that flowering plants can be cultivated in accordance with coloring, kinds or seasons. Fifthly, there can be provided a hanger which is simple in structure and can be easily detachably attached by anyone, since in the hanging means, a plurality of upward hooks and the flange on the upper end of the hollow tubular body are engaged with the lower edge of the separate cap shaped hanger and the hanging member is only attached to the cap shaped hanger. Sixthly, there can be provided a hanger which is simpler, is simple in structure with slits formed and can be simply detachably attached by anyone, since the back surface of the flange and a ball are engaged on the upper end of the hollow tubular body and a hole through which the shaft provided with the ball passes is formed on the flange and the slits through which the thickness and width of the hook on the upper end of the shaft passes are simply formed on the flange of the hollow tubular body. Seventhly, in addition to the fifth advantage, there can he provided a hanger which can be prevented from slipping out even with a simple engagement, can rotatably direct the pot to a desired direction and can bear all the load of the suspended pots and is inexpensive, since the hanging member is provided with a press-in fixing means fitted to a space in the back surface of the flange on the upper end of each of the separate cap shaped hanger and/or the hollow tubular body, the shaft extending in the vertical direction of the upper and lower portions of the press-in fixing means, the hook formed on the upper end of the shaft and a retainer formed on the lower end of the shaft, and a step shaped engaging portion undercut to have diameter slightly larger than the diameter of the shaft is formed in the press-in portion and one opposed slit through which the retainers passes is simply opened at the right and left portions of the hole through which the shaft is inserted on the flange in the upper end of the separate cap shaped hanger or the hollow tubular body. In addition to the fifth advantage, there can be provided an inexpensive hanger in which the pots can be hung in multistages, the hanging member can be easily and simply hung in a desired position in operation only by inserting one retainer or the other annular hook into the flange on the upper end of the cap shaped hanger or the hollow tubular body and which can be applied to any pot because the hanging member may be designed so as to withstand all the loads of the suspended pots, since the hanging member includes at least one spherical plate arranged at a desired interval and fitted to a space in the back surface of each of the flanges in the upper end of the separate cap shaped hanger and/or the hollow tubular body, a shaft extended in the vertical direction of the spherical plate, and a retainer at one end of both the ends of the shaft and a hook or an annular hook at the other end of the shaft so as to have a desired configuration suitable for tensile strength, a plurality of protrusions are provided on the side surface of the semi-spherical shape and an inverted conical shape, at least one slit for passing the retainer, the annular hook and the protrusions therethrough is formed at the right and left portions of the hole for inserting the shaft on the flange in the upper end of the separate cap shaped hanger or the hollow tubular body and the rotation preventing ribs protrude at both the side edges of the slit. In addition to fifth advantages, there can be provided a hanger in which a member for dropping water to the hanging means passing through the tubular portion lower than the peripheral edge of the saucer is included and the water guide member is fitted so that water overflowing from the tubular portion lower than the peripheral edge of the saucer enters to a lower pot, so that the water can be more simply and assuredly supplied, the selection can be made such that the water guide member is not fitted to the pot for cultivating a cactus which does not require much water, the water can be filtered by using a filtering material such as a fiber material, a non-woven fabric, a coconut palm fiber material, etc. odor in a room can be reduced, the water can be more assuredly and simply treated and the water can be supplied to the pot in a room without spilling water.

### Brief Description of the Drawings

The present invention will be described in detail below with reference to the accompanying drawings which illustrate specific embodiments in which:
Fig. 1 is a sectional front view of a pot according to the present invention;
Fig. 2 is a sectional front view of the pot according to the present invention to which a hanging means is attached;
Fig. 3 is a sectional front view with a saucer attached to the pot of Fig. 2 showing the present invention;
Figs. 4A and 4B are sectional front views of a partly omitted hanging member and the hanging member attached to the main portion of the pot of the present invention;
Fig. 5 is a plan view taken along a line A-A of Fig. 4B;
Fig. 6 is a process flow diagram of an order for attaching the hanging member to the main portion of the pot;
Figs. 7A and 7B are sectional front views of a partly omitted hanging member and a main portion of a pot to which the hanging member is attached according to another embodiment of the present invention;
Fig. 8A and 8B show a plan view taken along a line A-A of Fig. 7A and a plan view of Fig. 7B in the present invention;
Figs. 9A to 9C are sectional front views of a partly omitted hanging member and a main portion of a pot to which the hanging member is attached according to another embodiment of the invention;
Figs. 10A and 10B are sectional front views of a cap shaped hanger of the main portion shown in Fig. 9C and a plan view of Fig. 9C according to the present invention;
Fig. 11 is a sectional front view showing an employed state that partly omitted pots are suspended; and
Fig. 12 is a sectional front view showing a state that partly omitted pots are suspended.

### Detailed Description of Embodiments

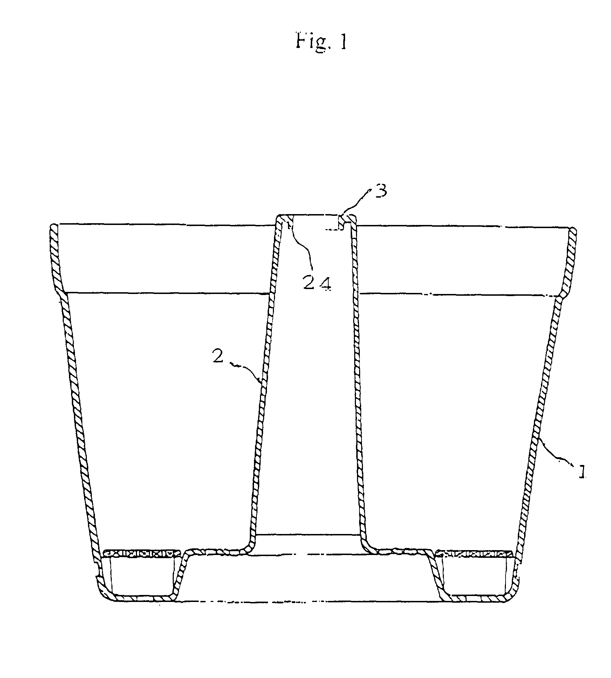

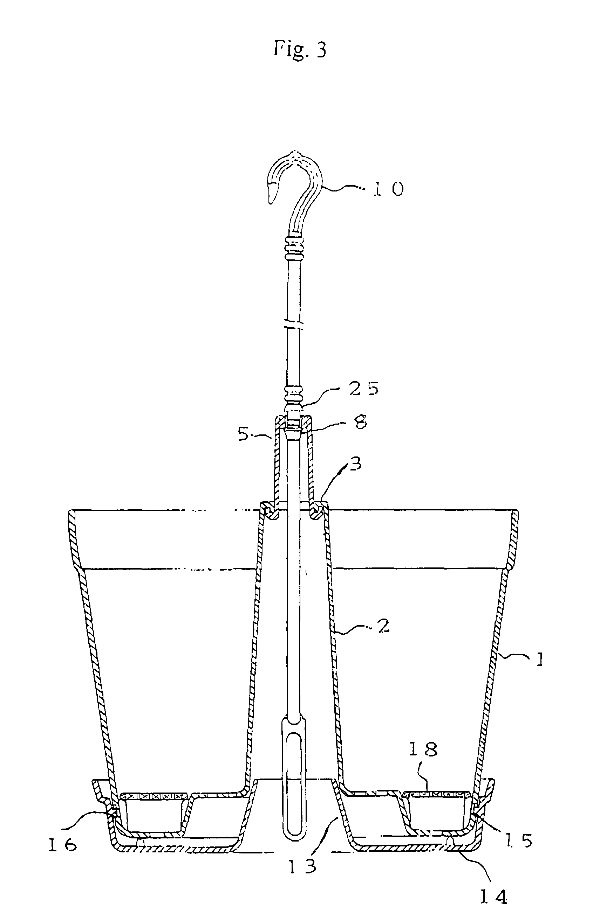

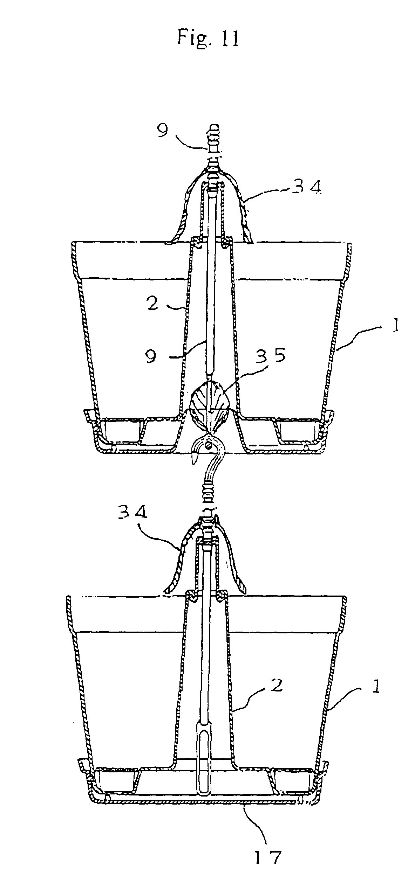

Now, a pot according to the present invention will be described by way of embodiments. The pot of the present invention may be applied to a flowerpot suspended in a multistage manner and used for a pot for a flower arrangement, artificial flowers or dry flowers and may be applied to pots made of materials such as a synthetic resin, pottery, glass, bamboo, wood, unglazed pottery or a regenerated synthetic resin. Preferably, a pot main body, a filtering net, a shaft and a saucer may be formed of polypropylene (PP), a cap shaped hanger may be formed of PP, polycarbonate (PC) or styrene resin and an S shaped hook may be preferably made of stainless steel. When the shaft with a hook or a retainer is used for a large pot or many pots, the hook may be may be formed of PC or a reinforced plastic such as FRP, etc. Figs. 1 to 12 show various embodiments of the present invention. Basically, as shown in Fig. 1, a spindle shaped hollow tubular body 2 integral with a pot is provided in the substantially central portion of the bottom of the pot 1 and a hanging means 4 is attached to the upper end portion 3 of the hollow tubular body to form the pot. Further, as shown in Fig. 3, a saucer 14, in the central portion of the bottom portion of which a tubular portion 13 lower than a peripheral edge is formed, is detachably attached to the pot 1 to form a hanging pot. The pot 1 is attached to the saucer 14 in such a manner that a plurality of inclined protrusions or recessed grooves 15 are provided in the lower side wall of the pot and a plurality of inclined protrusions 16 engaging with the protrusions or the recessed grooves are provided in the saucer and the pot is screwed to the saucer 14 to form the hanging pot. Further, as shown in Fig. 11, the lowermost stage portion of the saucer may serve as a large saucer 17 with no tubular portion or a tank (not shown). The pot may be formed in various kinds of configurations such as a trefoil shape, a four-leaf shape, a plum blossom shape, a polygonal shape, a semicircular shape, etc. or the inner portions of pots with various configurations may be divided by partition plates to form hanging pots. Further, an annular net 18 with legs made of polypropylene or the like may be laid or slag, Ceramis or Oasis (both arc trade names) etc. may be used as cultivating soil. Additionally, although a step portion is provided in the upper portion of the illustrated pot 1, without it, the hanging means 4 in the hollow tubular body 2 may be detached to be used as a guide to stack pots. The pot may be painted by various colors or may be transparent and the cultivating soil may be colored grains.

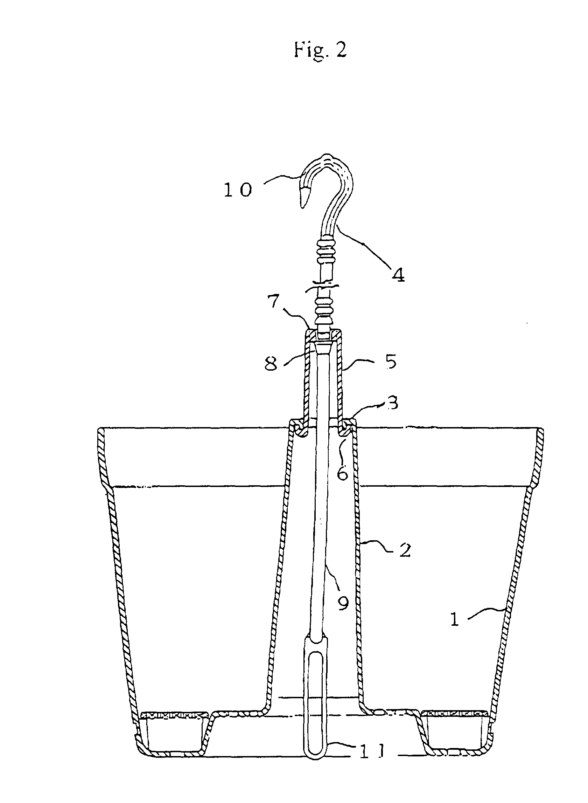

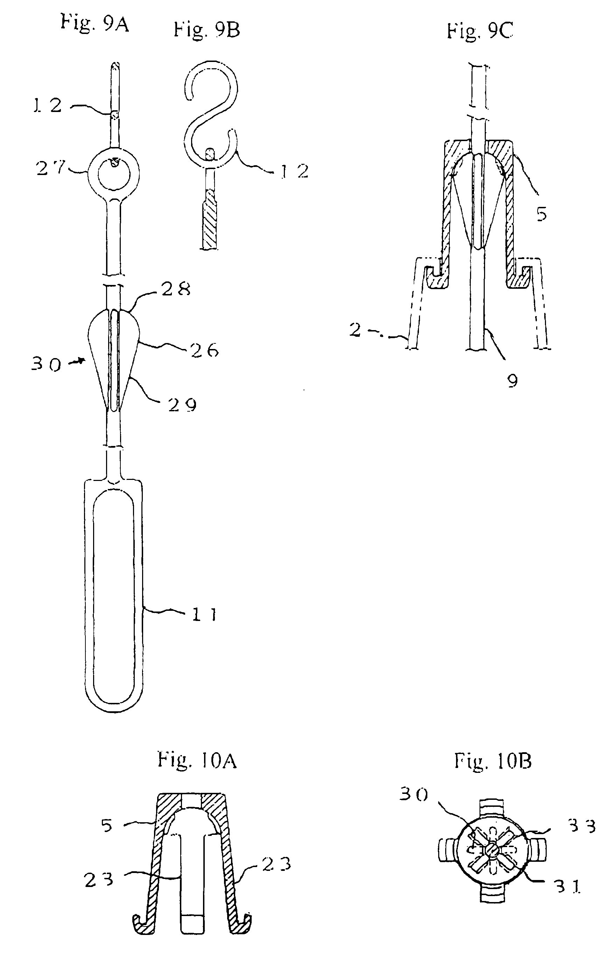

In the hanging means 4, a member (not shown) serving as a cork stopper is attached to the end of a string, a chain or a shaft and the hanging means of the string, the chain or the shaft may be inserted into the spindle shaped hollow tubular body 2. A hole for allowing the upper end of the hollow tubular body to engage with the back surface of a flange and a ball and the shaft provided with the ball to be inserted may be formed on the flange and a slit for allowing the thickness and width of a hook on the upper end of the shaft to pass through may be formed in the flange of the hollow tubular body. As illustrated in Fig. 2, in the hanging means 4, a plurality of, preferably, four upward hooks 6 arranged at equal intervals and the flange 7 on the upper end of the hollow tubular body 2 are engaged with the lower edge of a separate cap shaped hanger 5 and a hanging member is attached to the cap shaped hanger 5. Further, the pots are suspended in multistages by an engaging portion 8 made of a synthetic resin such as PC, PP, etc. to which the hanging member is fitted through an upper flange 7 in the space of the separate cap shaped hanger 5, the shaft 9 extended in the vertical direction of the upper and lower portions of the engaging portion 8, a hook 10 in the upper end of the shaft 9 and a retainer 11 in the lower end of the shaft. As shown in Fig. 9, an S shaped hook 12 may be employed to achieve various kinds of connections. It is to be understood that the above members are not limited to these configurations or engagements and a nylon string or a stainless steel chain may be used in place of the shaft 9. Reinforcing ribs may be provided in the hook as shown by dashed lines.

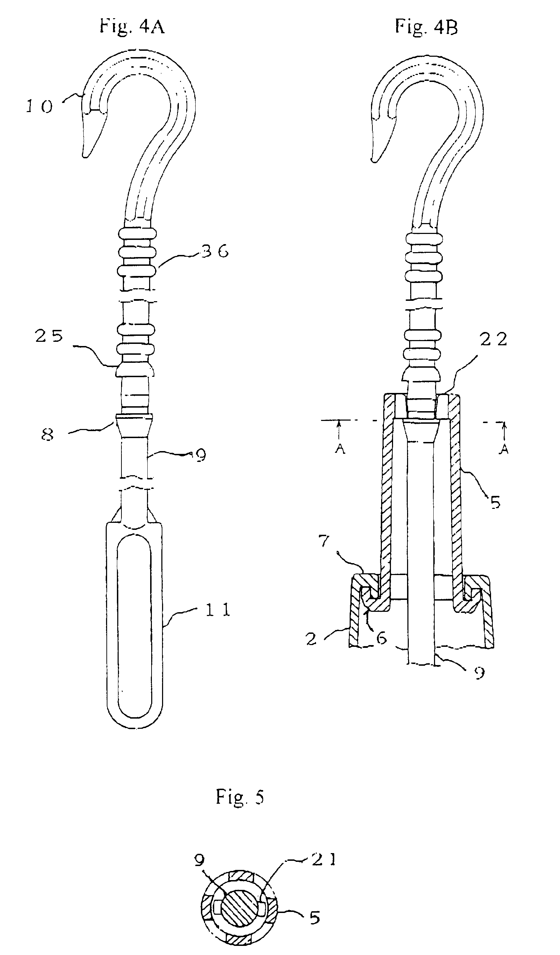

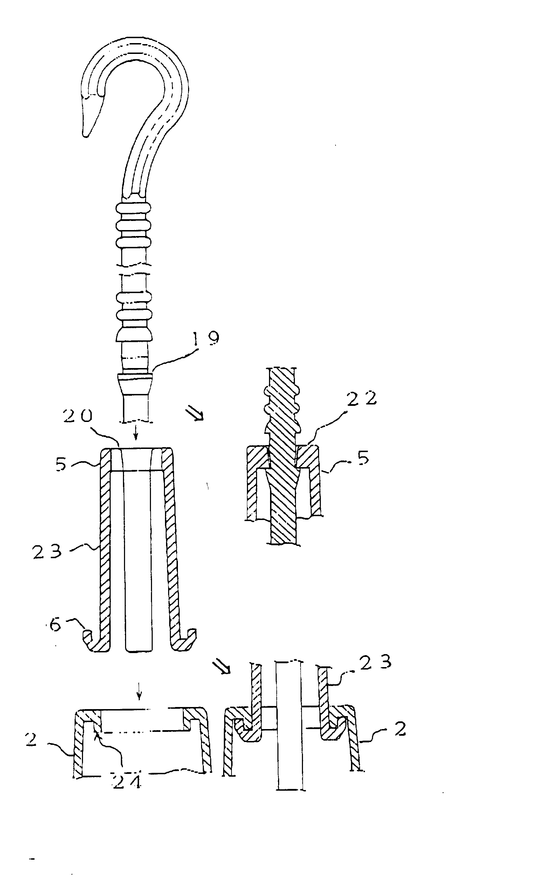

Further, as shown in Figs. 4 to 6, in a hanging means of another preferred embodiment, a press-in fixing means fitted to the space of a flange 7 in the upper end of a separate cap shaped hanger 5 or a hollow tubular body, a shaft 9 extending in the vertical direction of the upper and lower portions of the press in fixing means, a hook 10 in the upper end of the shaft and a retainer 11 in the lower end of the shaft are provided. In the pressed-in portion, is provided an engaging portion 19 with a step undercut to have diameter slightly larger than the diameter of the shaft 9. One opposed slit 21 for allowing the retainer 11 to pass through is formed at the right and left sides of a hole 20 for allowing the shaft to be inserted on the flange 7 in the upper end of the separate cap shaped hanger 5 or the hollow tubular body. Then, the pressed in portion is pressed in the flange 22 of the cap shaped hanger 5 or the flange 7 of the hollow tubular body, and then, while bottom portions 23 having four upward hooks 6 at lower edges are pushed by fingers, the hooks 6 are engaged with the flange 7 in the upper end of the hollow tubular body 2 in accordance with a procedure shown in Fig. 6, so that the hanging means as shown in Fig. 4A can be obtained. Preferably, the thickness of each flange may be gradually increased downward and the diameter of the shaft at this portion is gradually decreased downward or a slide preventing shade type ring 25 may be provided at a desired position from the press-in fixing means of the shaft. Further, a ring shaped downward protrusion 24 is provided in the end of the horizontal flange 7 in the upper end of the hollow tubular body, so that this protrusion serves as a reinforcing rib to prevent a hanger from slipping off and a pot from being deformed. When the cap shaped hanger 5 is pressed inward, the hanger can be detached together with the shaft from the pot. However, when the cap shaped hanger 5 is pressed in and fixed to the hollow tubular body of the pot, the shaft and the pot rotate, however, the cap shaped hanger 5 cannot be detached from the pot. A reference numeral 36 designates an annular decoration attached to the shaft. The lowest shade type ring 25 serves as a stopper for preventing the shaft from slipping off.

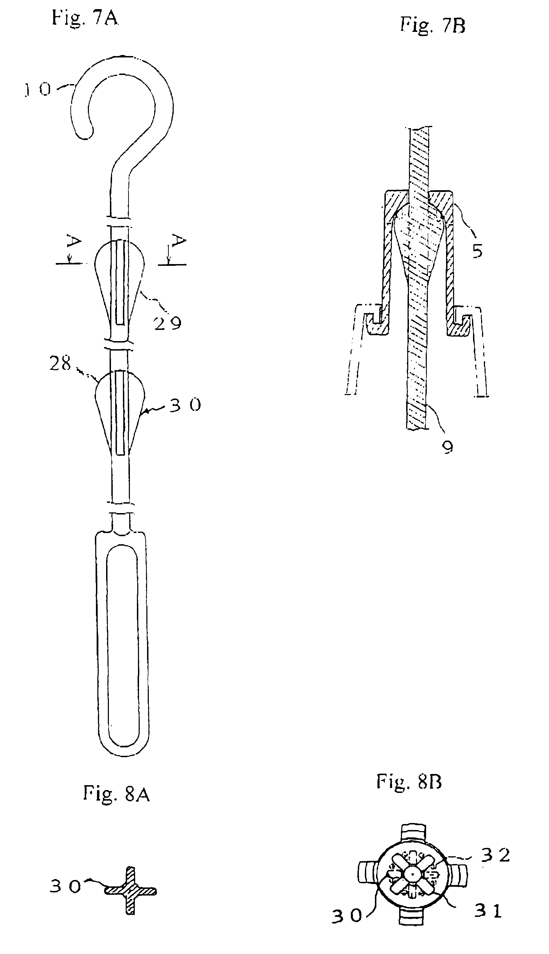

Still further, in a hanging member of still another embodiment as shown in Figs. 7 to 10, are provided at least one spherical plate 26 made of a synthetic resin such as PC, PP, etc. and fitted to a space in the back surface of each of flanges 22 and 7 of a separate cap shaped hanger 5 and/or a hollow tubular body 2 at a desired interval, a shaft 9 extended in the vertical direction of the upper and lower portions of the spherical plate, a retainer 11 at one end of both the ends of the shaft and a hook 10 or an annular hook 27 as shown in Fig. 9A at the other end of the shaft. Preferably, at least one spherical plate 26 has an upper half 28 with a semi-spherical shape and a lower half 29 with an inverted conical shape. The side surfaces of the semi-spherical shape and the inverted conical shape include a plurality of, preferably, four protrusions 30 arranged at equal intervals. A hole 20 into which the shaft is inserted is formed. Cross shaped slits 31 through which the retainer 11 or the annular hook 27 and the protrusions 30 pass are formed on each of the flanges 22 and 7 in the upper end of the separate cap shaped hanger 5 or the hollow tubular body. As shown in Fig. 10B, rotation preventing ribs 33, 33 ... protrude at both the side edges of the slits, or as shown in Fig.8B, rotation preventing bosses 32, 32.... protrude at both the side edges of the slits, so that pots can be suspended in multistages. In operation, one retainer or the other annular hook is only inserted into the flange in the upper end of the cap shaped hanger or the hollow tubular body so that a hanging member can be simply hung in a desired position and all the loads of the suspended pots is applied to the upper hook or the annular hook 27. Thus, the hanging member may be designed so as to withstand the load.

Further, as shown in Fig. 11, a member 35 for dropping water to a hanging means 4 passing through the tubular portion 2 of a saucer 14 is enclosed thereby. Preferably, a shade type water guide member 34, for instance, a packing made of a synthetic resin having slits on its side surface is fitted to the shaft 9 of a hanging member in the upper portion of the pot, so that water can be more assuredly and simply treated without spilling. Since the water of an upper pot is allowed to flow to the pot to which the water guide member is fitted, the water can be more simply and assuredly supplied to the pot. Preferably, as the member 35 for dropping water, a fiber material, a non-woven fabric, the fiber material of coconut palm or a filtering material is employed, so that the water can be cleaned. A bag containing charcoal powder good in cultivating flowering plants and a member containing fertilizer may be also employed.

Now, an operation will be described. A spindle shaped hollow tubular body 2 is provided in the substantially central portion of the bottom of an integrally formed pot 1 and a hanging means 4 is attached to the downward protrusion of the flange of the hollow tubular body with rigidity. Since a saucer with a tubular portion is simply fitted and screwed to a position as the central portion of the bottom of the pot, the saucer can be detachably attached to the pot. The lowermost portion of the saucer has a large saucer or a tank, so that water can be more assuredly treated without spilling. Further, the pot is configured in various kinds of forms such as a trefoil shape, a four-leaf shape, a plum blossom shape, a polygonal shape, a semicircular shape, etc. or the inner portions of the pots with various configurations are divided by partition plates, so that each pot can be employed depending on its use. For instance, the pot can be hung in the corner of a room. Further, since the inner portions of the pots with various configurations are divided by the partition plates, the cultivation of flowering plants suitable for the classification of colors, kinds or seasons can be performed. Further, the foaming material with water absorption property such as Oasis (trade name) may be supplied to the pot to arrange natural flowers or dry flowers may be displayed by using a support material. A fiber material or Ceramis (trade name) or the like may be supplied to the pot to perform a water culture. In the hanging means 4, a plurality of, preferably, four upward hooks 6 arranged at equal intervals and the protrusion 24 of a flange 7 in the upper end of the hollow tubular body 2 are engaged with the lower edge of a separate cap shaped hanger 5 and a hanging member is attached to the cap shaped hanger 5. In the hanging means, a hole for allowing the back surface of a flange and a ball to engage with the upper end of the hollow tubular body and a shaft provided with the hall to pass is formed on the flange. Preferably, a press-in fixing means includes a vertically extending shaft 9, a hook 10 at the upper end of the shaft and a retainer 11 at the lower end of the shaft, an engaging portion 19 with a step undercut to have diameter slightly larger than the diameter of the shaft and one opposed slit 21 formed on the flange 22 or 7 in the upper end of the cap shaped hanger 5 or the hollow tubular body 2 for allowing the retainer to pass at the right and left sides of a hole 20 for allowing the shaft to be inserted. Then, as shown in Fig. 6, the undercut engaging portion 19 with the step is pressed-in and fixed to the flange 22 or 7 in the upper end of the hanger 5 or the hollow tubular body 2. When the separate cap shaped hanger 5 is used, while bottom portions 23 provided with the upward hooks 6 are pressed by fingers, the hooks 6 are engaged with the protrusion 24 of the flange 7 of the hollow tubular body 2 to obtain a hanging pot.

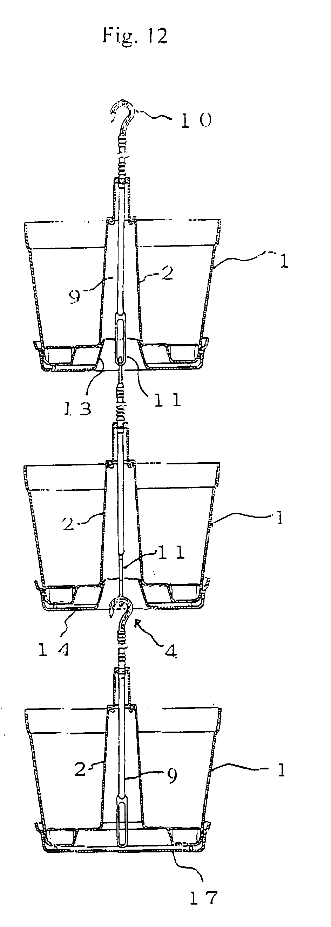

Further, as another embodiment of a hanging member, in order to attach a hanging means to the upper end of a hollow tubular body, are provided at least one spherical plate 26 fitted to a space in the back surface of each of flanges 22 and 7 of a separate cap shaped hanger 5 and/or a hollow tubular body 2 at a desired interval, a shaft 9 extended in the vertical direction of the upper and lower portions of the spherical plate, a retainer 11 at one end of both the ends of the shaft and a hook 10 or an annular hook 27 at the other end of the shaft. Preferably, at least one spherical plate 26 has an upper half 28 with a semi-spherical shape and a lower half 29 with an inverted conical shape. The side surface of the semi-spherical shape and the inverted conical shape includes a plurality of, preferably, four protrusions 30 arranged at equal intervals. Two slits 31 through which the retainer 11 or the annular hook 27 and the protrusions 30 pass are formed at the right and left and upper and lower portions of a hole 20 for allowing the shaft to be inserted on each of the flanges 22 and 7 in the upper end of the separate cap shaped hanger 5 or the hollow tubular body. Rotation preventing ribs 33, 33 ... or bosses 32, 32.... are formed at both the side edges of the slits, so that pots can be suspended in multistages. In operation, one retainer or the other annular hook is only inserted into the flange in the upper end of the cap shaped hanger or the hollow tubular body so that a hanging member can be simply hung in a desired position. When the retainer protrudes from the bottom of the pot during a planting work, the shaft 9 is held by one hand and the pot is rotated by 45° while the pot is a little raised as shown in Fig. 10. Thus, an engagement is released to locate the retainer at a position hidden from the bottom of the pot, so that the pot can be placed in a stable state and the planting work can be easily done. As shown in Fig. 12, the desired number of pots can be readily suspended by anybody. Since a supporting point for suspending the pot is stably located in the upper portion separate from the center of gravity, a work is carried out with ease. Further, the handing means is located at a central portion, it does not interfere with a planting work or a seeding work with good appearance. Further, the number or the size of hanging pots is changed so that the pot can be designed to a desired type of hanging pot. Since the load of each of hung pots is exerted on the shaft, the strength of the retainer, the hook or the annular hook may be designed so as to withstand the load of the pot. Thus, the hanging means may be applied any pot such as pots made of regenerated plastics possibly inferior in strength, regenerated paper and heavy pottery. Further, a member 35 for dropping water to the hanging means passing through a tubular portion lower than a peripheral edge of a saucer is enclosed thereby and a shade type water guide member 34 is fitted to the hanging means in the upper portion of the pot so that the water overflowing in the tubular portion is supplied to a lower pot without spilling the water. Thus, the water can be more assuredly and simply supplied to the pot by anybody. Further, a hanging pot or each of pots hung in multistage can be freely rotatable. Therefore, the pot can be easily watered under rotating it, and can be turned to any desired positions.

## Claims

1. A hanging pot, **characterized in that** a spindle shaped hollow tubular body (2) which is integral with a pot, is provided in an approximately central. portion of the pot (1), and a hanging means (4) is attached to an upper end portion of the hollow tubular body (2).

2. A hanging pot as set forth in claim 1, **characterized in that** a horizontal flange portion (3) is provided onto the upper end portion of the hollow tubular body (2), and a ring shaped downward protrusion (24) is provided to an end of the flange portion (3).

3. A hanging pot as set forth in claim 1 or 2, **characterized in that** a saucer (14) having a tubular portion (13) which is lower than a peripheral edge and is formed in a central portion of a bottom thereof, is detachably attached to the pot (1).

4. A hanging pot as set forth in claim 3, **characterized in that**: a plurality of inclined protrusions or recessed grooves (15) are formed in a lower side wall of the pot (1); a plurality of inclined recessed grooves or protrusions (16) engaging with the protrusions or the recessed grooves (15) are formed in the saucer (14); and the pot (1) and the saucer (14) are attached by screwing to each other.

5. A hanger, **characterized in that** in a hanging means (4), a plurality of upward hooks (6) formed in a lower edge of a separate cap shaped hanger (5) are engaged with ring shaped downward protrusions (24) at an end of a flange (3) of a hollow tubular body (2), and a hanging member is attached to the cap shaped hanger 5.

6. A hanger, **characterized in that** in the hanging means (4), a ball provided to a shaft (9) is engaged with a back surface of the flange (3) on an upper end of the hollow tubular body (2), a hole for passing the shaft (9) is opened on the flange (3), and a slit through which a thickness and a width of a hook (10) on the upper end of the shaft (9) passes, is formed in the flange (3).

7. A hanger as set forth in claim 5, **characterized in that** the hanging member includes: a press-in fixing means fitted to the back surfaces of the flange of an upper end of the separate cap shaped hanger (5); a shaft (9) extending vertically in the upper and lower portions of the press-in fixing means, a hook (10) attached onto the upper end of the shaft (9); and a retainer (11) attached onto the lower end of the shaft (9), and that in the press-in portion, an engagement portion having a step which is undercut to have a diameter slightly larger than that of the shaft (9) is formed, and one slit opposed on a right or left side to a hole for inserting the shaft (9) so as to pass the retainer (11) is opened in the flange on the upper end of the separate cap shaped hanger (5).
